# EUROPEAN PATENT SPECIFICATION

(11) **EP 1 612 165 B1**
(45) Date of publication and mention of the grant of the patent: **14.11.2007**
(21) Application number: 05013845.2
(22) Date of filing: 27.06.2005
(51) Int. Cl.: B65G 63/00

(54) **Large-sized automated warehouse system for harbor facilities**
Großformatiges automatisiertes Lagerhaussystem für Hafen-Service
Grand système d'entrepôt automatisé pour des services de port

(30) Priority: 02.07.2004 IT MI20041334
(43) Date of publication of application: 04.01.2006
(73) Proprietor: FATA S.p.A., 10044 Pianezza TO (IT)
(72) Inventor: Di Rosa, Gaetano, 10025 Pino Torinese TO (IT)
(74) Representative: Faraggiana, Vittorio

(56) References cited:
- EP-A- 0 768 256
- WO-A-20/04076321
- DE-A1- 10 150 915
- PATENT ABSTRACTS OF JAPAN vol. 2002, no. 03, 3 April 2002 (2002-04-03) & JP 2001 322721 A (ISHIKAWAJIMA HARIMA HEAVY IND CO LTD), 20 November 2001 (2001-11-20)
- PATENT ABSTRACTS OF JAPAN vol. 2003, no. 12, 5 December 2003 (2003-12-05) & JP 2004 107031 A (SUZUYO KK; ISHIKAWAJIMA HARIMA HEAVY IND CO LTD), 8 April 2004 (2004-04-08)

## Description

This invention relates to an automated warehouse system for receiving containers in harbor facilities, according to the preamble of claim 1.

Such a warehouse type is made up generally of a construction of large size that contains on several stories a multitude of cells each for housing one or two containers and arranged in rows separated by passages for transit of automatic devices for container translation between the entrance and outlet zones of the warehouse and the cells and between different cells of the facility. In addition to the horizontal translation devices (in jargon 'shuttle') elevators for change of story are also provided at the ends of the passages. An example of such warehouse is disclosed by EP-A-0768256.

In these warehouses a problem difficult to solve is to optimize relocation of the containers and their positioning in the warehouse essentially in order to reduce loading and unloading times to acceptable figures for practical use.

Over the years the problem has progressively increased because of the need to perform loading and unloading of the container-carrying ships in ever shorter times in view of the ever growing costs of stopped ships and of the continuous increase in the sizes of container ships and container traffic. It is expected that container traffic will increase by between 74% and 92% in 2010.

The tendency towards an increase in the dimensions of container ships will lead in a short time to passing from ships of a capacity of 5500 TEU to ships of 8,000 to 10,000 TEU with expectation of further increases in capacity in the immediate future (12,000 to 18,000 TEU).

Speed of handling of the flow of containers that such ships generate is essential for ships of these sizes to be used profitably. It is thought that one of the objectives to reach would be to achieve unloading and loading of an 8,000 to 10,000 TEU ship in 24 hours. This involves a time cycle of 14 to 16 seconds for all the cranes that must unload the ship.

The warehouse must be able to support the resulting high flows of containers without introducing slow-downs, also despite the need to straighten up the containers, which usually have to leave the warehouse in an order entirely different from that of arrival.

Present known warehousing systems are not able to offer enough performance to meet those requirements.

The general purpose of this invention is to remedy the above mentioned shortcomings by making available an automatic container-warehouse having high efficiency in addition to innovative characteristics of organization and safety.

In view of this purpose it was sought to provide in accordance with this invention a multistory warehouse system having the features mentioned in claim 1.

To clarify the explanation of the innovative principles of this invention and its advantages compared with the prior art there is described below with the aid of the annexed drawings a possible embodiment thereof by way of non-limiting example applying said principles. In the drawings:
FIG 1 shows a diagrammatic plan view of an intermediate story of the warehouse system that is for entry and exit of containers,
FIG 2 show a cross-sectioned side elevation view of the warehouse of FIG 1,
FIG 3 shows a diagrammatic plan view of one of the stories of the warehouse that is for accumulation of the containers,
FIG 4 shows an enlarged view of a detail of an entry and exit zone of the warehouse,
FIG 5 shows an enlarged view of a detail of a station for moving the containers between the loading and unloading cranes and the entry and exit of the warehouse,
FIG 6 shows a plan view of the upper part of the station of FIG 5,
FIG 7 shows a diagrammatic side elevation view of a shuttle for transportation of the containers inside the warehouse,
FIG 8 shows a diagrammatic head view of the shuttle along line of cut VIII-VIII of FIG 7,

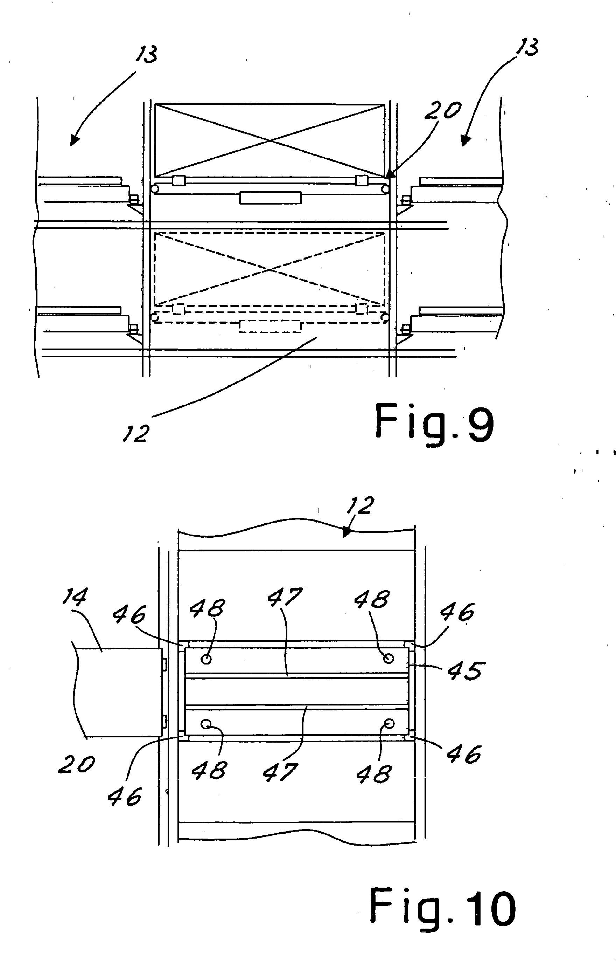

FIG 9 shows a diagrammatic side elevation view of an elevator in the warehouse,
FIG 10 shows a diagrammatic plan view of the elevator of FIG 9,
FIG 11 shows a diagrammatic plan view of a mover between abreast cells,
FIG 12 shows a diagrammatic elevation view of a variant embodiment of a warehouse system in accordance with this invention,
FIG 13 shows a diagrammatic plan view of the variant of FIG 12,
FIGS 14, 15, 16 show enlarged views of possible variants of an entry and exit zone of the warehouse on the land side, and
FIG 17 shows a diagrammatic plan view of a second variant embodiment of a warehouse system in accordance with this invention.

With reference to the figures, a warehouse realized in accordance with this invention designated as a whole by reference number 10 includes a building virtually parallelepiped in form 11 made up of a virtually reticular layout to define a plurality of stories each of which contains a plurality of cells or boxes 12 arranged along parallel rows for reception of containers. The cells are arranged abreast in the lengthwise direction of the containers and faces with the short side onto corridors 13 arranged between the rows for transit of automated shuttles 14 for transportation of the containers and insertion thereof into the cells or extraction thereof from the cell.

In the realization described the warehouse includes as an example six rows of container storage cells 12 separated by four passages 13 in which the distributing shuttles 14 move. Naturally, a different number of rows and boxes per row can be provided depending on the requirements and desired storage capacity. Advantageously, each cell can contain a 40/45-foot container or two 20-foot containers.

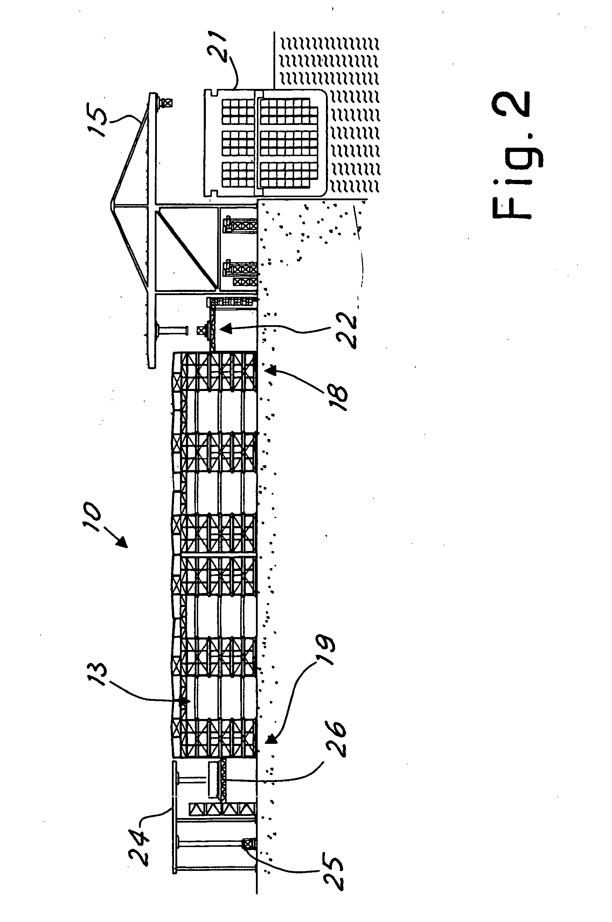

As may be seen in FIG 2, the description given here refers to a 6-story system by way of example. The number of stories is also set for each specific case depending on the characteristics of the application.

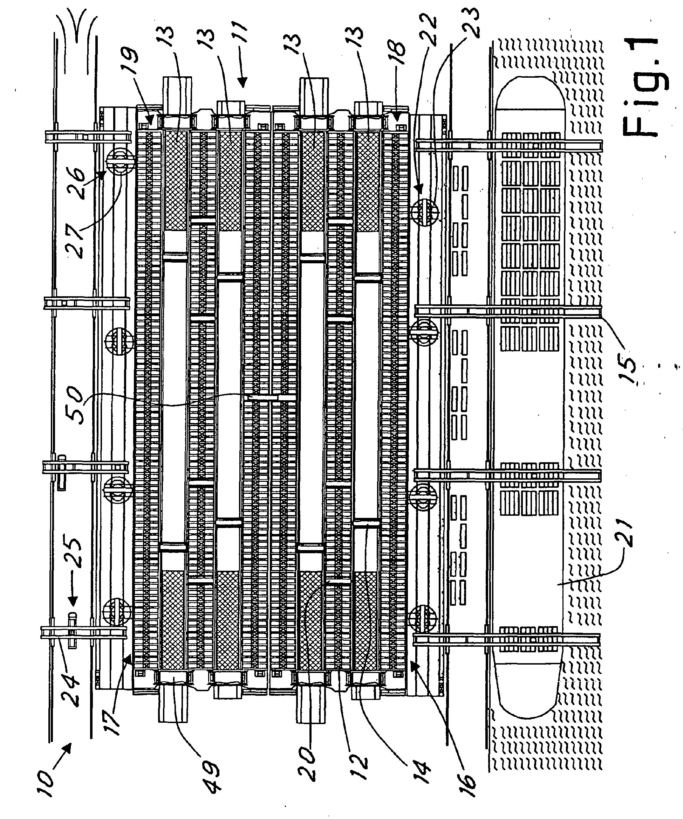

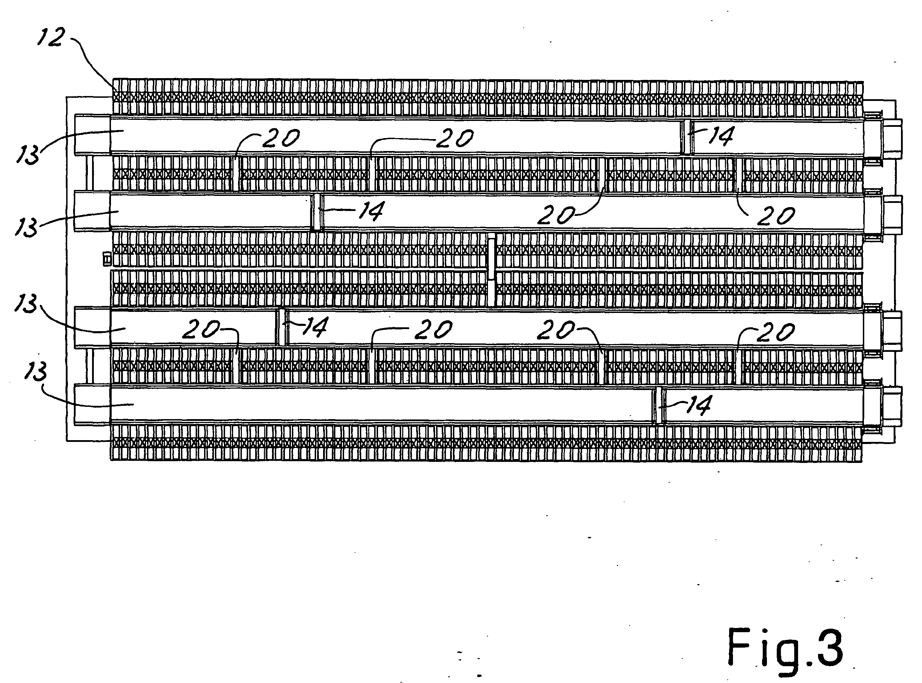

However that may be, one of the stories (shown in FIG 1) is for insertion and extraction of the containers into and from the warehouse and for sorting of the containers from and to the other stories. This story is advantageously an intermediate story (for example, in the case described it is advantageously the 5th story) chosen to be near the load and unload level of the containers onto and from the ships so as to optimize the vertical runs of the loading and unloading cranes (designated by reference number 15 in FIG 1). Other stories (one of which is shown in FIG 3) are for accumulation of the containers and are essentially similar to the reception story with the difference of not having the entry and exit on the wharf side.

In the advantageous realization shown, entry and exit of the containers to and from the warehouse takes place on opposite sides 16, 17 of the warehouse parallel to the rows of cells. In particular, entry and exit take place through a row 18, 19 of double-access cells arranged along the corresponding entry and exit side and with all the cells of the row facing outward through their minor side also.

As clarified below, a single entry and exit story to serve both the side 16 and the side 17 can be provided or an entry and exit story for side 16 and an entry and exit story for side 17 in order to optimized the height of entry and exit on the basis of the vertical differences in height to be faced for loading and unloading of the containers into and out of the means of transport.

For example, while the entry and exit story on the wharf side can be advantageously the fifth, the entry and exit story on the opposite side 17, that serves the road-haulage or railway means, can be advantageously lower (for example the fourth story).

In any case, the difference between the outer box row of a story that is also for entry and exit and the same row on a non entry and exit story at least on that side is merely the lack of the possibility to extract the containers from said row outward.

As may be seen in FIG 1, beside the first row 18, 19 of boxes is the first passage 13 for running of the shuttles 14 which collect the containers from the outer boxes and distribute them to the free boxes of the second row inward or to the internal elevators 20 arranged at regular intervals in the second passage. Indeed, as clarified below, in the rows of boxes there are boxes which, without changing the pitch between the boxes, receive elevators for transfer of the containers between the stories. Advantageously, no elevators are provided in the outermost cells.

On the side 16 of exchange with the ship (designated generically by reference number 21) there are loading and unloading cranes 15 and transit stations 22 having external shuttles 23 (described in greater detail below) each arranged near a respective crane 15 to receive from the crane the containers being unloaded or supply to the crane the containers being loaded and transport them from and to the cells of the row of entry and exit cells 16.

On the side 17 of exchange with the land means 25 (perhaps on another story of the warehouse, for example the fourth) there are similarly loading and unloading cranes 24 and transit stations 26 having external shuttles or distribution carriages 27 (similar to those on the other side and described in greater detail below) each arranged near a respective crane 24 to receive from the crane the containers being unloaded or supply to the crane the containers being loaded and transport them from and to the cells of the row of entry and exit cells 17. The carriages 27 can also have only a limited capability of movement along the boxes to be able to serve each a predetermined number of boxes (for example five) around an established loading and unloading position. In this case the running rails in the same manner as the layouts supporting them can be correspondingly shortened to allow use of the space between two transit stations for handling of the land vehicles also.

Based on the flow of containers in transit on the land side there can be provided more than one of these assemblies or combinations of the various component (one transit station and associated carriage with two cranes, two transit stations with associated carriages with three cranes et cetera). It is of course possible to make the additions later if changes in flows make it necessary.

The revolving distribution trolley carriage 27 is opposite the fourth story of the shelves; the fourth story is high enough to allow passage under the platform of trains and trucks transporting the containers and at the same time close enough to the ground to make the run of the crane and hence loading and unloading time minimal.

Layout of the exit toward the ground on the fourth story and of the exit toward the sea on the fifth has the advantage of keeping the flows separate to not create bottle necks.

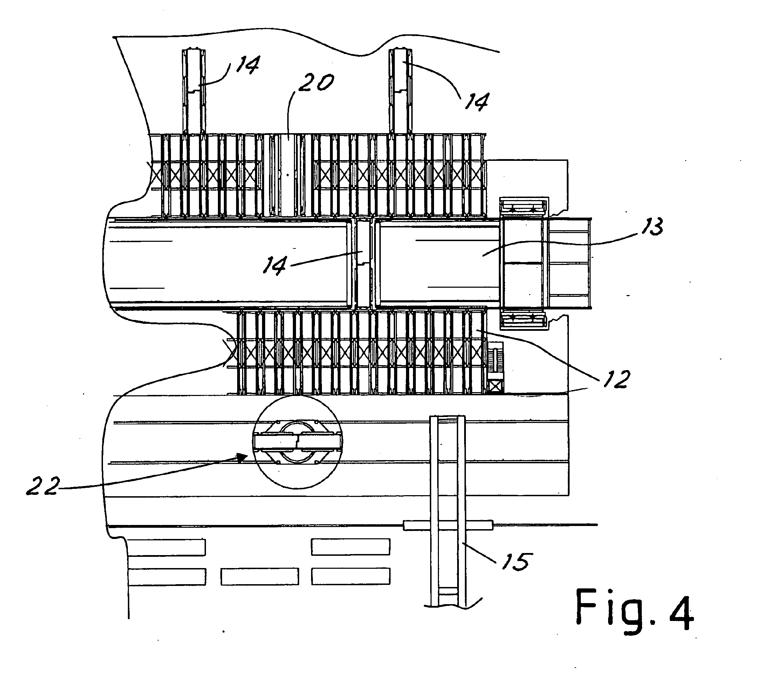

FIG 4 shows an enlarged view of a zone of the warehouse near the cranes on the wharf side similar to the opposite zone on the land side.

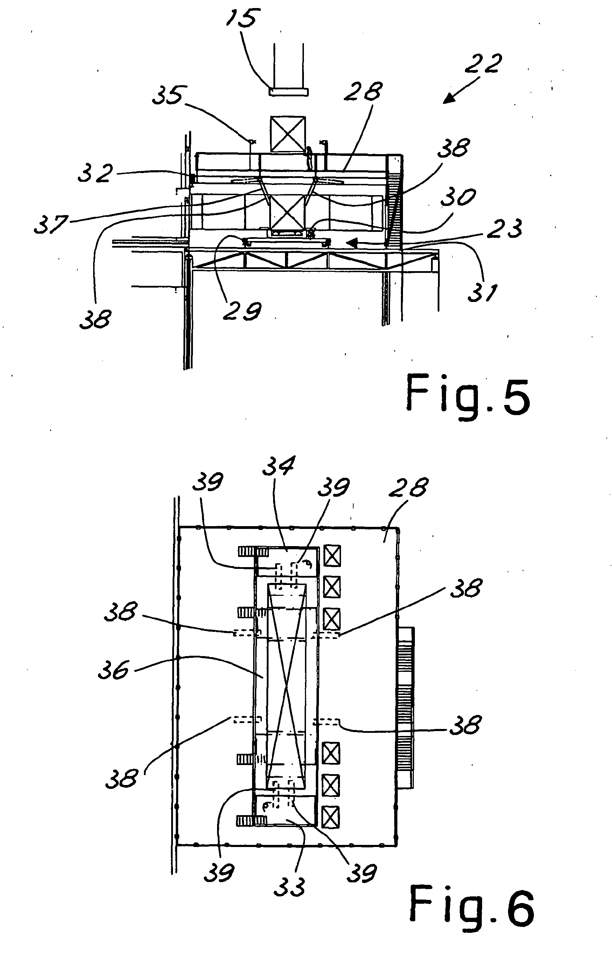

FIG 5 shows in greater detail a side view of a transfer station 22.

As may be seen in said figure, the transfer stations 22 between cranes and the interior of the warehouse include an upper mobile platform 28 and a shuttle 23 made up of a revolving distribution trolley 29 complete with ensilage carriage 30. Advantageously the revolving distribution trolley can be equipped for a predetermined longitudinal travel (for example five boxes) compared with the predetermined loading and unloading position so as to be able to unload and load the container directly in some boxes near said loading and unloading position since the boxes belong to the box row 18 placed on the loading and unloading story.

The container reception platform can be advantageously rotatable in two different directions for the purpose of orienting the containers in the more advantageous direction for operation in the warehouse (for example connection to the container refrigeration power supply) independently of the direction in which they were taken from the ship or vice versa in the more advantageous direction for the ship-board operations when warehouse-to-ship transshipment is done.

The mobile platform 28 rests on wheels that run on tracks 31, 32 parallel to the entry-exit side of the warehouse and respectively rested on one side on the pavement of the loading and unloading story and on the other side on the shelving at a height allowing passage of the containers beneath the platform.

As known, the containers on board the ships are mostly connected one to the other by means of coupling devices called 'twistlock' that are placed between one story and the other of containers. In the working position, the twistlocks are hooked both to the base of the upper container and to the top of the lower container. In rest position they are hooked only to the upper container and are disconnected from the lower one.

When the containers are to be unloaded from the ship, the associated twistlocks are placed in rest position so that the containers are free from each other and can be hoisted individually by the crane. The twistlocks remain hooked to the base of the container and follow it to an emplacement where they must be removed because they occupy the corner holes of the container and because they must be free when the container is rested on the vehicle that will carry them to their final destination and because the twistlocks usually belong to the ship's on-board equipment and thus must return to the ship from which they were taken.

In accordance with one aspect of this invention it was found advantageous to provide a layout permitting removal of the twistlocks in the transit stations. For this purpose, as seen better in FIG 6, above the platform 28 a space 33, 34 is provided for keeping in a safe and ergonomically correct position those assigned to removal of the twistlocks, in addition to housing a possible known automatic container code reading system 35 or the operator who acquires manually the code by means of a known portable terminal.

The platform 28 has an opening 36 through which the containers can pass while they are being unloaded by the cranes. Advantageously, the length of the opening is adjustable (thanks to the running of two platform parts that realize the communication trenches of the spaces 33, 34) as a function of the container length which in accordance with the standards can vary in general between 45' and 20' to allow those assigned to the twistlocks (who must work at the two ends of the container) to work in the best conditions.

Insertion and disconnection of the twistlocks is advantageously performed manually because of the large variety of twistlocks in existence.

As an alternative it is possible to use efficient automatic systems for insertion and removal of the twistlocks on the platform.

The platforms 33, 34 can be powered to run toward each other on command of a container dimensions detector or on command of the operators. One automatic adaptation of the dimensions of the opening to the dimensions of the container already provided in the realization described here constitutes a first step of the automation process of the entire operation.

Immediately beneath the tread plane of the platform 28 and supported by the latter there is a container centering and guide device 37. This device consists of four transversal centering arms 38 and four longitudinal centering arms 39 (visible in broken lines in FIG 6). These arms are hinged to the structure and dampened to turn elastically towards the interior of the container passage to funnel them towards the central position. This system allows centering the container on the references present in the supporting positions on the transport trolley 23 below.

The position of the arms is adjustable to be adapted to the different dimensions of the containers and is automatically adjusted by means of appropriate known actuators as a function of the size of the container arriving or leaving. This adjustment is virtually simultaneous with the adjustment of the dimension of the opening of the platform.

Each arm is controlled independently and includes a known cushioning system to softly cushion the oscillations accomplished by the container when it is suspended from the crane cables.

Moving the platform 28 is obtained by means of electric motors and its position is determined by the position which the crane takes for unloading or loading a certain row of containers. The timing between the two positions is advantageously obtained automatically by means of position data that from the crane control system reach the warehouse control system which consequently governs the position of the transit stations. The position of the stations can also be 'adjusted' with a manual control by the crane operator in case particular operating conditions make it necessary.

Advantageously the platform 28 is stopped for all the time used by the crane for loading and unloading a row of containers (Bay) from or onto the ship. The platform moves at low speed together with the crane only when the crane moves to go onto another bay. In this manner the personnel on the platform can work in safe conditions without jolts or unnecessary movements of the platform.

The revolving distribution trolley 29 is conceptually similar to a shuttle with ensilage carriage like those that move in the internal passages of the shelving with the addition of a revolving platform interposed between the longitudinal running carriage and the ensilage carriage.

The revolving platform of the shuttle 23 allows receiving the container in the position determined by the crane (parallel to the axis of the shelving) and to rotate it by 90° to take it into the position that it must have inside the shelving (perpendicular thereto).

The revolving platform can rotate by 90° either clockwise or counterclockwise allowing thus to present one end or the other of the container towards the shelving depending on necessity (for example the side of the refrigerated containers carrying the connecting cable must be oriented toward the ship or shelving side where the appropriate power outlets are available).

To optimize the loading and unloading cycle the rotation movement can take place simultaneously with the translation movement from and to the entry and exit cell of the warehouse container.

Thanks to the layout described above, the exchange station between the cranes and the warehouse allows fast transfer of the containers from the cranes to the warehouse to free the crane in a short time and at the same the time allows performance in safe conditions of the accessorial operations that have to be carried out during the transfer (for example removal or insertion of the twistlocks and reading of the container code upon entry or exit).

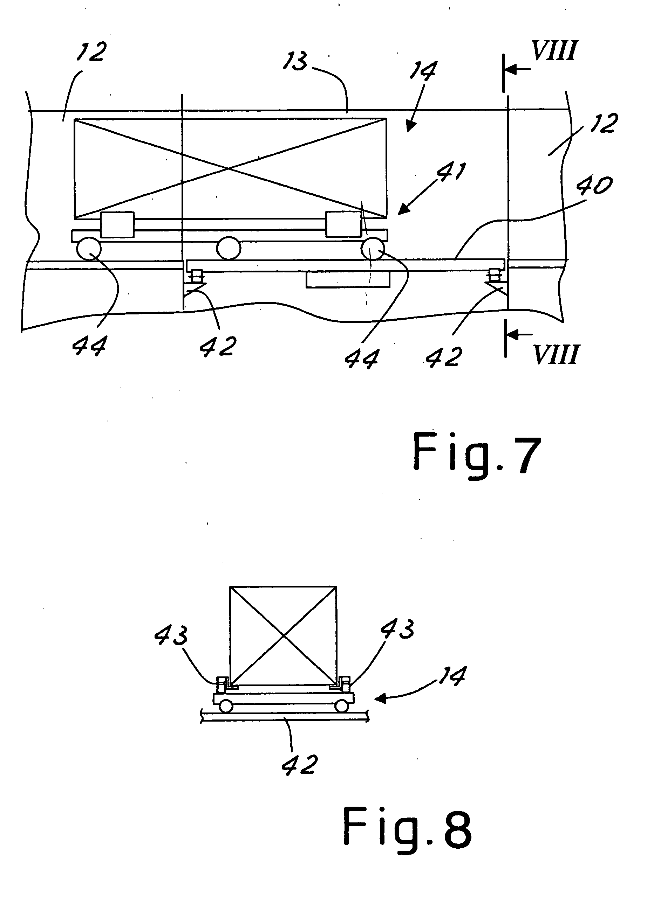

As mentioned, the stations 26 on the land side are similar to those just described. As a difference, only the platform for centering means can be provided and not personnel on board or have the centering means arranged on board the revolving distribution car and be totally without the platform. FIGS 7 and 8 show in greater detail one of the shuttles 14 used along the passages inside the warehouse. Said shuttle 14 is made up basically of two main parts, the unit 40 for transfer along the passage (or shuttle unit) and the ensilage carriage 41. In this manner a device is realized that can take a container from a box independently, transfer it on board the shuttle vehicle, move it laterally until it is aligned with another box, and deposit it in that box.

The shuttle 40 is basically a carriage with elongated form that moves in the direction perpendicular to its longer axis on a pair of runways 42 similar to that of a bridge crane.

The ensilage carriage 41 is a carriage transported by the shuttle, moves in a direction perpendicular to that of movement of the shuttle and can go out therefrom and enter entirely into a storage box of the containers (FIG 7 shows an intermediate position towards the interior of a cell). The ensilage carriage is equipped with known means 43 for hoisting movement allowing disengagement of the container from the references present in every box, transfer the container to a centered position as regards the shuttle and set it down on the shuttle references.

The opposite sequence of movements transfers the container from the shuttle to the box.

The shuttle, for example realized of an electrically welded steel structure, can be made up essentially of two heads united by a central frame and a small balcony for maintenance and support of the electrical equipment.

Each head can be provided with two powered wheels with heat treated steel tread to increase life and can be provided with a series of lateral guide rollers that ensure correct translation of the bridge crane on the runways 42.

The central part is made in such a manner as to house within it the ensilage carriage 41 and there can be appropriately shaped boards laterally to hold the container, even if empty, in the correct position during translation.

The drive wheels can each have an independent power source, for example piloted by a frequency variation that, in case of breakdown of a unit, is capable of taking the shuttle to a maintenance area.

Electric power can be supplied by any known system, for example there can be provided a double brush unit, power outlet of the sliding type that is capable of ensuring perfect power supply even in the passages between passage and elevator or on the expansion joints, or from a known power transfer system without inductive contact. Such systems, being readily imaginable to one skilled in the art, are not shown here nor described further.

Positioning of the shuttle along the shelving can be determined by a suitable basically known control system with encoder that communicates with the warehouse central control system. The shuttle is advantageously fitted with anticollision bumpers of the type with microcellular structure with energy absorption, photocells for control of positioning and on-board load control sensors.

The ensilage carriage 41 can be made up of structure, advantageously also electrically welded, obtained by using hot rolled and sheet.

In the central part is located the hoisting platform controlled by means 43 realized for example with a series of electromechanical jacks 43 or with a pneumatic or oleodynamic system.

Translation powering is made up of units 44 located at the ends of the carriage. Each unit is made up of bearing wheels and a motor reducer (not shown) that controls one of the wheels. This ensures perfect passage between the bridge crane and the shelving and vice versa.

The superabundance of power units ensures always being able to complete the mission even in case of breakdown of a power unit. The carriage can also be provided with side contrast rollers that ensure correct alignment in both the bridge crane and the shelving.

Power is supplied by a series of cables contained in a known cable-carrying chain or by a system of transfer of power without contact as for the shuttle.

The carriage is advantageously equipped with photocells for control of the box and for anticollision, high or low limit switch panel, photodiodes for positioning and control et cetera, all controlled by a suitable PLC positioned on board and transmitting and receiving data through transmission photocells located on the ensilage carriage and on the shuttle.

As stated above, some selected cells 12 of the rows include elevators 20 for transfer of only the container from one story to another of the shelving.

The elevator consist of a mobile frame 45, a hoisting unit (not shown being virtually prior art, for example with counterweight) and a series of vertical guides on which the mobile frame runs. The hoisting unit can consist of a winch with double motor to allow operation of the elevator even in case of breakdown of a motor. The hoisting unit can be placed on the top of the building in a purposeful winch room or on the ground floor near the elevator.

The mobile frame includes in turn a platform bearing in the upper part a pair of runways 47 on which the ensilage carriage can run and a series of rests 48 for the different types of container.

When the mobile frame 45 is aligned with a story the ensilage carriage of a shuttle with a container on board rises onto the platform sets down the container and returns onto the shuttle to which it belongs and the elevator can then begin its movement towards another story.

In the lower part of the mobile frame there can advantageously be arranged four automatic bolts (not shown) that allow locking the mobile frame when it is aligned with a story, thus ensuring perfect alignment of the mobile frame with the fixed rails on which the ensilage carriage runs.

In the warehouse there can also be service elevators (designated generically by reference number 49 in FIG 1). Each of these is conceptually equal to an internal elevator but can transport a complete shuttle with even a possible on-board container instead of only the container and is used to take the shuttles to the different stories when the latter must be moved for maintenance or to cover particular requirements of a story. For example the shuttles can be carried to the ground for special maintenance and periodic overhauls. Advantageously the service elevators are arranged at the ends of the passages so as to not interfere with normal traffic. On each story at the ends of the passage opposite the elevators there can be provided an ordinary inspection and maintenance zone.

As may be seen from the drawings, the maintenance zone can include runways to allow extraction of the carriage means outside the shuttles.

Providing an elevator at least one end of the corridor, it is possible to move the shuttles from one story to the other (including the ground story) to introduce and extract the shuttles into and from the corridors depending on necessity.

The elevator can transport a shuttle with the container onboard for the purpose of allowing evacuation from the warehouse of a shuttle with a breakdown that does not allow setting the container down in a cell before sending it to repair.

The mobile frame of the elevator can be equipped with means of coupling to a road vehicle purposefully arranged for transport of a loaded shuttle for the purpose of allowing easy transfer of the shuttles to said vehicle.

As may be seen well in FIGS 1, 2 and 3, in accordance with another aspect of this invention the warehouse stories can be realized formed in two zones, one nearer the entry zone of the containers on the wharf side and one closer to the zone on the opposite side. These two zones can correspond to two warehouse 'modules' abreast. In the zone of contact between the two modules the boxes for the containers are facing each other without corridors for running of the shuttles. Some pairs of facing boxes are equipped with horizontal transferors 50 that are mobile to traverse the cells of the pair to move a container from one box of the pair to the other and vice versa. Basically, a sort of mobile box located alternatively in the two positions is realized.

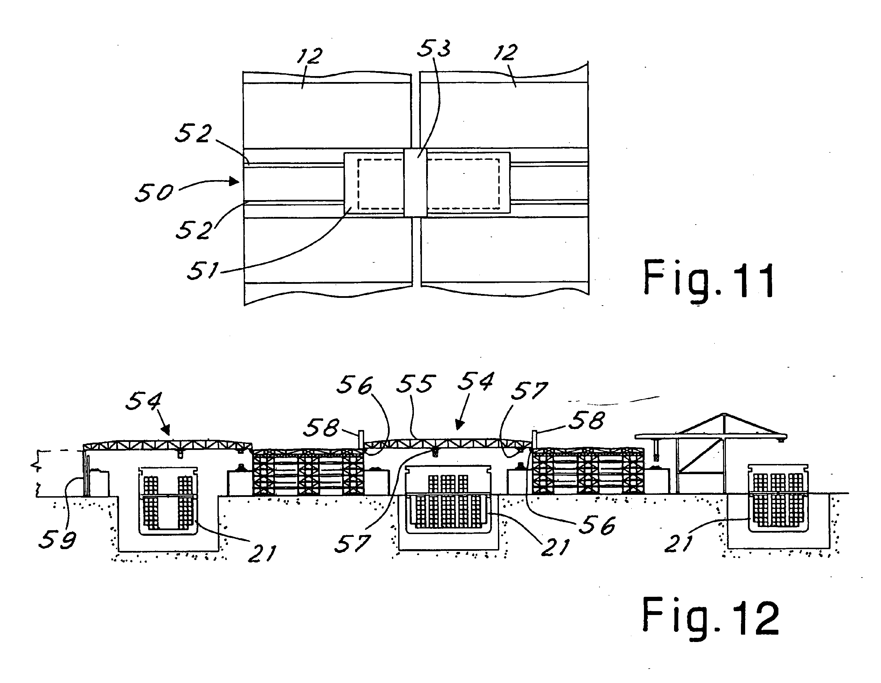

FIG 11 shows diagrammatically a pair of such boxes. The transferor 50 is advantageously realized with a powered platform 51 the same size as a box and running on rails 52 between the boxes of a pair. For the sake of standardization, the transferor 50 can be advantageously realized with an ensilage carriage identical to those installed on the shuttles.

These mobile boxes can be advantageously used for unobtrusive inspection (container inspection system) of the containers. To this end a known inspection port 53 (for example X-ray, gamma-ray or another system of viewing the interior of a sealed container) can be provided in the passage since these boxes have good availability in time and are relatively simple to make. An increase in their number dictated by the increase in the quantity of containers that have to be inspected is not excessively costly.

Their positioning with a large buffer upstream and downstream also allows absorbing container arrival peaks and sizing the inspection system on the mean production figures required. The inspection system can also be located opposite landward entry and exit boxes 18, 19 and seaward if it is preferable to make the inspection before placing the container in the warehouse.

All the automated warehouse operations are calculated and performed by a suitable computerized control system whose general layout can be readily imagined by those skilled in the art even on the basis of the description below of the operation of the warehouse system and will not be described in detail.

In use, the warehouse in accordance with this invention allows high flexibility of employment, there being no particular predetermined paths but it being able to vary depending on the availability of boxes, order and quantities of containers arriving and/or exiting.

During unloading of a ship each crane sets down the container on the associated revolving distributor with the axis oriented parallel to the wharf, the revolving distributor rotates it by 90° and moves to alignment with a free box, sets down the container in the box and returns to the waiting position opposite the crane, and on the return run rotates even by 90° to be ready to receive the next container.

Each crane is served by a revolving distributor that performs a simple cycle and is thus always available to receive the container from the crane.

The containers that were set down in the first box row are taken by one of the internal shuttles present in the first passage of the shuttles and transferred to one of the elevators or to a free box of the second row of boxes.

The containers set down on the second box row are retaken by the shuttle of the second passage and transferred to the mobile boxes that allow its transfer to the second module.

In addition, the shuttles of the second passage can introduce into the elevators the containers set down temporarily in the second box row (for example because no elevator was available) or set them down in the third box row. The container can be introduced into the elevator by moving from one passage to the other.

The second module works in a similar manner with the shuttles that sort the containers to the elevators and to the boxes of the fourth, fifth and sixth rows.

In short, the fifth story carries out the function of sorting the containers destined for the various stories and zones and as temporary storage unit to absorb the container arrival peaks while the other stories mainly carry out the function of storage while preserving in any case the possibility of making transfers from one module to another and from one box row to another.

During the loading of a ship, the containers located in the storage boxes of the 6th, 4th, 3rd, 2nd and 1st stories are moved over one of the numerous possible paths to the fifth story and into the zone opposite the crane that will load them onto the ship.

The time sequence of arrival at the fifth story need not correspond exactly to the sequence required by the loading plan of the ship since the final reordering of the shipment is done at the fifth story that is especially dedicated to these operations.

The cycle of transfer from the warehouse to the ground can take place as follow.

A container is carried by an internal shuttle into one of the storage box units provided near each point of transfer from and toward the land.

The distributing carriage, through the ensilage carriage with which it is equipped, takes the container, rotates it by 90° while orienting it parallel to the direction of travel of the trucks and trains and waits for the crane to pick it up.

In the meantime the container-code reading cameras in the transit station can read the code and communicate it to the control system.

The crane then takes the container, moves longitudinally and transversely so as to align with the truck or railroad car that is to receive it and sets it down thereon.

Advantageously, two passages can be dedicated to the trucks and one or two to the trains. If necessary, for exigencies of traffic, it is naturally possible to increase the number of passages.

As may be seen in FIG 1, the crane can also deposit the container on the ground on a passage that is located at the side of the platform set aside for the containers that are to be taken by the straddle carrier to be transported to other zones of the port.

The cycle of transfer from the ground to the warehouse takes place following the reverse sequence.

It is possible to perform combined loading and unloading cycles with resulting advantages for the flow of arriving and departing vehicles. For example, a truck arrives loaded and leaves loaded with another container towards a new destination.

There are many paths for transferring a container between two positions inside the warehouse and this allows at any time having a free path available or the paths can be done in parallel and hence there are no bottle necks.

This configuration makes it easy to arrange the number of machines really necessary in each zone for meeting in an optimal manner the needs of production and hence of making the best possible use of every single machine. For example there can be provided a high density of machines on the fifth floor near the crane where the traffic is most dense and a lower density in the zones of little traffic set aside for storage.

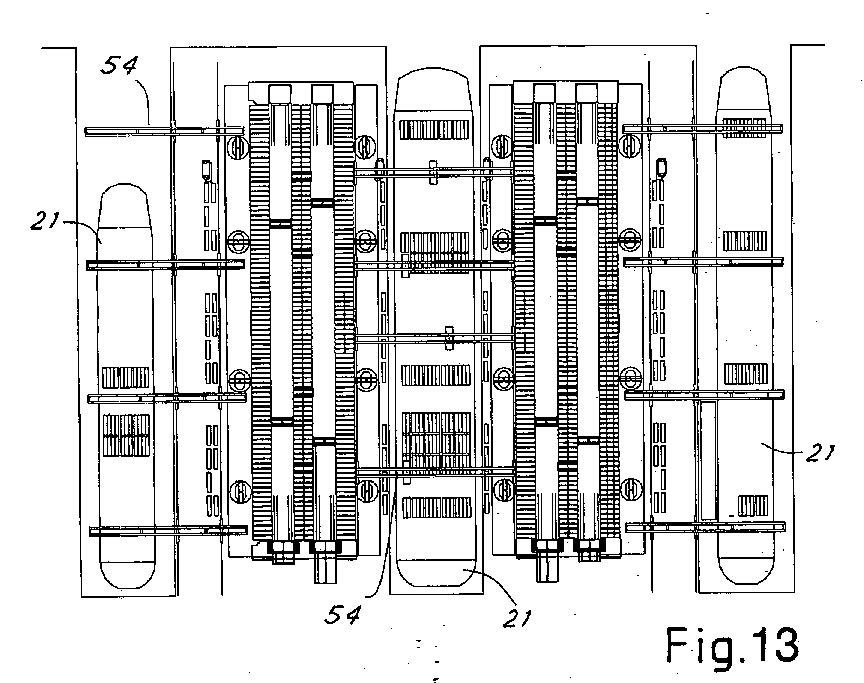

FIGS 12 and 13 show a possible variant embodiment of a warehouse system realized in accordance with the principles of this invention.

In this realization the wharf is built with a 'bay' layout into which the ship is introduced and the warehouse layout is decomposed into warehouses arranged among the bays.

The cranes with cantilevered arm of the previous embodiment can be replaced by bridge cranes. In the figures this is shown for example for crane number 54 of the central bay.

This type of crane can perform the same work as a conventional wharf crane but with double the productivity as it is equipped with two winch carriages with independent movement that unload or load one to the right and one to the left of the ship.

As may be seen in FIG 12, each bridge crane consists of the bridge 55, the carriages 56 supporting the ends of the bridge, and two winch carriages 57 for hoisting and translation of the containers. A series of gangways and communication trenches are provided for access to the winch carriage control booths.

The bridge consists of a beam supported at the ends that can be realized in truss beam or caisson beam form as a function of the various requirements (transportation, environmental conditions, availability of materials et cetera).

The beam carries the runways on which the two winch carriages run, the supports for the carriage translation control cables, and the gangways for access to the winch carriage control booths. If the beam is realized as a caisson beam, the communication trenches can also be realized inside the beam.

Each of the carriages supporting the ends of the bridge runs on two runways resting on the top of the warehouses beside the bay. As easily imaginable to those skilled in the art, one of the two carriages can react to the vertical, longitudinal and transversal forces while the other can react only to the vertical and longitudinal ones to allow adaptation necessary for expansion and settling of the entire series of structures.

The two carriages running on the bridge can be powered independently and the movement can be synchronized automatically by means of an encoder. Small movements controlled by the crane operator are also possible to allow perfect alignment with the rows of containers of the ship.

Connection between the beam and the carriages can easily be releasable so as to allow raising of the bridge, in a purposeful location, for example by means of purposeful known elevators 58 (FIG 12) if it becomes necessary to have a ship with very high superstructures transit beneath it.

The winch carriages are basically the same as those employed on a normal wharf crane.

Even in case of a bay not arranged between two warehouse constructions it is possible to use a bridge crane by equipping it with legs 59 for resting on the ground on the side without warehouse. This is shown by way of example for the crane at the left in FIG 12. This solution also allows easier expandability of the layout if it is desired later to build another warehouse on the side of the bay not having one.

The bearing beam constrained at both ends is subject to less oscillation than those in the overhang beam used in conventional wharf cranes. This facilitates the work of the crane operator and increases the efficiency of the crane.

Operation of the rest of the warehouse remains basically unchanged although scaled down to be received in the spaces between the bays, the warehouse layout in accordance with this invention being capable of supporting without problems the increased efficiency of loading and unloading of ships obtainable by the use of the bridge crane described or fragmentation of the container storage layouts.

Bridge cranes offer the advantage of being able to draw close to each other much more than wharf cranes that have a considerable space occupied in the running direction. This allows having for example several cranes operating on the same ship or greater flexibility in the loading and unloading sequence. In addition, the bridge cranes do not rest on the edge of the wharf and the load on the foundation is not amplified as happens by the effect of the overhang in the wharf crane.

With the bay layout, transshipment of containers between ships moored in nearby bays is facilitated. For example a large ship can receive or send containers to two smaller ships in the bay at the side.

Transfer between the land side crane and the warehouse can also be done with means similar to those described above which carry out the same function with a different combination of mechanisms without thereby going beyond the scope of this invention.

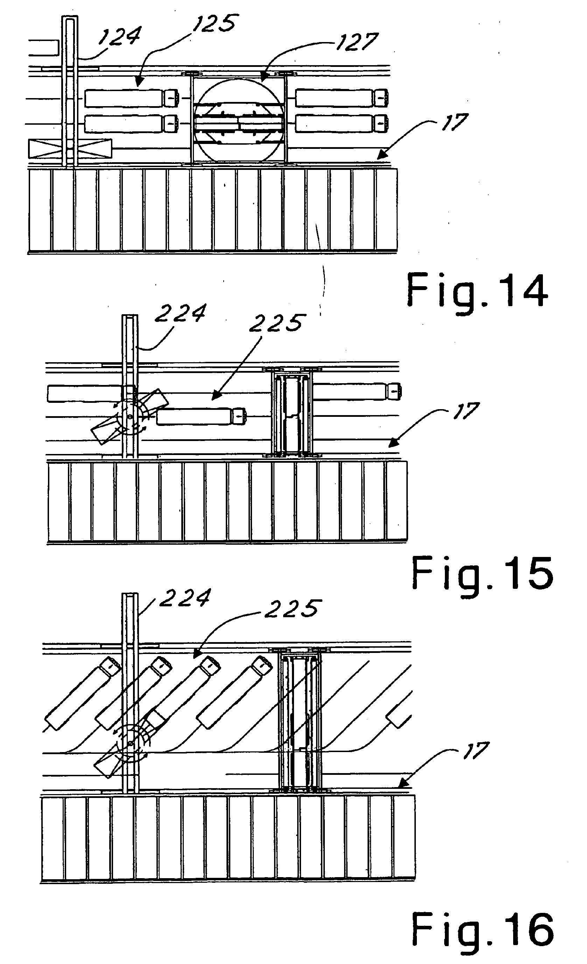

FIGS 14, 15, 16 show some possibilities.

FIG 14 shows the case in which the runways of the revolving carriage 127 have a gauge such as to be supported by the warehouse structure on one side and by the runway structure of the crane on the other. This in fact makes the supporting platform superfluous and the revolving carriage is suspended above the land transportation systems 125 towards and from the outside of the warehouse. In this manner the crane can unload the container in any position in which obviously the revolving distribution car is not present at that time.

FIG 15 shows a variant of the above solution in which the rotating movement for orienting the container as regards the warehouse and the land vehicles 225 is entrusted directly to the crane 224, appropriately equipped. This alternative reduces the space occupied by the distribution carriage while further increasing the flexibility of the crane's pick up and set down point.

FIG 16 shows a variant of the solution of FIG 15 in which the waiting positions of the trucks 225 are organized differently (for example herring bone) so as to best utilize the capacity of the crane 224 for orienting the container.

The choice between the various possible alternatives depends mainly on the volume and type of traffic expected.

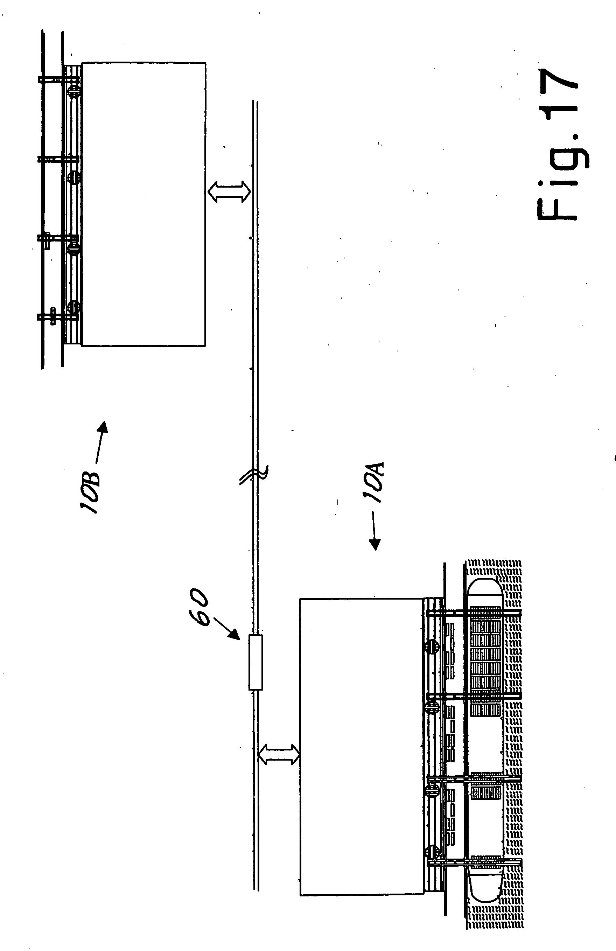

FIG 17 shows another variant embodiment of the warehouse that is particularly advantageous in perspective of decongestion of the ports and heavy road haulage traffic in the port cities.

In accordance with this variant, the warehouse has been cut into two sections or warehouse parts 10A and 10B located the first at wharf 10A and the second 10B at a site distant even tens of kilometer in which a sufficiently large surface area for realization of an inland port is available.

Warehouse bodies 10A and 10B are connected by dedicated shuttle trains 60 that can use the existing railroad infrastructures in the intervals between normal trains.

The space occupied in the port is thus quite reduced because it is sufficient to create a small storage unit to ensure continuity of the loading and unloading operations while the main part of the warehouse is arranged in a zone easily accessible to road and railroad traffic (superhighway and railroad junctions) where all the sorting, logistics and medium-term storage operations typical of a freight village can also be carried out. This allows perfect integration of maritime transportation with land transportation while utilizing to the best the principal characteristics of the different localities.

The nearly total automation of the container transfer process between ship and warehouse of the inland port also favors transfer of all customs operations to a more equipable area for the specific purpose while freeing other space inside the port to be dedicated to specific port activities.

With reference to the solutions shown in FIGS 14, 15, 16 it is clear that the limit on the number of boxes intended for exit and entry of the above embodiments no longer applies.

Indeed, the number was dictated by the compromise between the dimensions of the platform on which the revolving distributor moved and the need for a storage unit for container ready for exit or entry.

With the new solution the revolving or non-revolving distribution cars are free to move over the entire extension of the shelving and hence all the boxes can be dedicated to container entry or exit with resulting increase in the flexibility of the system and simplification of management of the shuttles that serve the row of landward entry and exit cells.

This solution is particularly advantageous in the application shown in FIG 17 used preferably in situations in which there is high traffic from and toward land assimilable to that on the seaward side in case of prevalent transshipment.

As a result of the independence of movement of the distribution cars, the cranes also, which transfer the container from the distribution car to the trucks or trains, benefit from a greater independence of movement that can be further increased by arranging the crane bridge at a height such as to allow straddling a container aboard the distribution cars by a container aboard the crane spreader. In other terms, while the crane with a container aboard is moving in one direction, the distribution car with a container aboard can pass beneath it to reach the best position for the following transfer of the container to the crane.

To achieve this, it might be worthwhile to arrange the landward exit story on a story lower than the fourth. In any case the landward exit story can be different from the seaward entry and exit story and not necessarily the third or fourth stories.

It is now clear that the preset purposes have been achieved.

With a warehouse in accordance with this invention multiple functions are possible among which the following are mentioned by way of example:
- automated resequencing in transshipment (i.e. transfer from a larger ship to a small ship and vice versa) and in intermodal sea to land transfer and railroad to road haulage of the containers,
- temporary deposit of the containers by means of a cell system that make it very flexible,
- high container traffic clearing capacity from and to the warehouse cell system while eliminating all the handling on the ground with conventional self-moving means, i.e. elimination of traffic congestion except in special cases for which recourse is still had to said self-moving means similarly,
- simultaneous circulation of road haulage means from the wharf to the yard behind and vice versa for special cases of long storage or for containers that exit by land or that arrive by land to pass to the ship,
- the possibility of rapidly loading and unloading even with several cranes abreast in very reduced spaces,
- transfer of containers from loading and unloading end-zones considering the possibility of being able to realize very much extended warehouse systems along the wharf,
- management of storage and traffic, hence continuous traceability of the individual container, and
- elimination of errors linked to intervention of operators, elimination of problems that appear in particular when in the formation of the container sequence in particular towards ships or towards the railway system it is necessary to trace and pick up containers located in unfavorable or out of the way positions.

With the warehouse layout in accordance with this invention the transit of various conventional road haulage means is possible to realize the wharf-side connection with the yard behind on which the containers are deposited and stored in the conventional manner for more or less long periods. This is made possible by the fact that all of the mechanized system is arranged on a high story of the system so that at the wharf level (ground story) only the supporting columns are found. In this manner the wharf offers practically the same accessibility had without an automated warehouse even considering the fact that with the automated warehouse the conventional transfer activities are very much reduced and reserved for emergency situations such as for example moving of special containers (nonstandard size, last minute et cetera).
Arrangement of the loading and unloading system at a certain elevated height together with the capability of segregating and overseeing the containers and entrances limits or excludes the possibility of intrusion with all the possible implications. In addition, a high degree of accident-prevention is achieved.

In addition, the fact that the cranes deposit the containers on a handling system arranged at a height near the unloading height from the ship increases the productivity of the wharf crane thanks to the reduced deposit run that also limits swinging due to acceleration and wind.

Positioning of the crane to warehouse transfer stations along the wharf takes place automatically in a flexible and efficient manner as a function of the position of the crane determined in turn by the mooring position of the ship and the arrangement of the container rows inside it.

Naturally the above description of an embodiment applying the innovative principles of this invention is given by way of non-limiting example of said principles within the scope of the exclusive right claimed here.

The description given refers to a warehouse arranged in a port area. It is however easy to imagine how a warehouse in accordance with this invention might be placed in a normal site where road haulage or rail et cetera transport means are found in place of container ships.

In addition, in the description given the warehouse is organized in abreast modules arranged parallel to the wharf front. The warehouse, if it proved preferable because of constraints of a 'geographical' or other nature, could be developed with shelving arranged transversely to the wharf front. This arrangement is valid in particular when the depth of the yard is high and the wharf is relatively short and, given the volumes moved, it is necessary to use the part behind the yard to pile up the 'long parking' containers in the open. This remains valid even in the case of a long and sufficiently deep wharf.

The number of machines and in particular of the shuttles installed on each story depends on the volume and characteristics of the port traffic, i.e. on the percentage of transshipped containers compared with those embarked and disembarked and can easily be adapted to changing situations.

In the warehouse there can easily be provided communication trenches at each story to allow passage of personnel for connection of any refrigerated containers to the electrical mains if known automatic connection systems are not provided for them, and for access to inspection equipment if installed.

Lastly, it is clear that the modular layout proposed could easily be modified to allow realization of warehouse expansion both during designing and when under way.

## Claims

1. Multistory warehouse system (10) with aligned rows of cells (12) for accommodating containers therein and corridors (13) parallel to said rows, on which corridors (13) said rows of cells (12) face and in which corridors (13), in each story, shuttles (14) run for moving containers along the corridor (13) in said story and for insertion and extraction of containers into and from cells (12) facing the corridor (13) in said story, **characterized in that** the rows of cells comprise cells which include an elevator (20) for movement of the containers between the stories.

2. Warehouse system in accordance with claim 1, **characterized in that** on one story the warehouse has a row (18, 19) of external cells opening on an external side (16, 17) of the warehouse to constitute an entry and exit for the containers towards transit stations (22, 26) that receive the containers from loading and unloading cranes (15, 24, 54).

3. Warehouse system in accordance with claim 2, **characterized in that** cranes (15, 54) face a wharf for receiving and unloading containers from a container ship (21).

4. Warehouse system in accordance with claim 2, **characterized in that** cranes (24) face a runway to receive and unload containers from land means (25).

5. Warehouse system in accordance with claims 3 and 4, **characterized in that** the warehouse has rows (19, 18) of cells (12) on opposite sides (17, 16) for exchange of containers with land means (25) and with the ship (21).

6. Warehouse system in accordance with claim 5, **characterized in that** the story for exchange with the ship (21) and the story for exchange with land means (25) are different from each other.

7. Warehouse system in accordance with claim 6, **characterized in that** the story for exchange with a ship (21) is the fifth story of the warehouse.

8. Warehouse system in accordance with claim 6, **characterized in that** the story for exchange with land means (25) is the fourth story of the warehouse.

9. Warehouse system in accordance with claim 2, **characterized in that** the transit stations (22, 26) each include a platform (29) for reception of a container which is rotatable to be arranged parallel to the rows of cells (12) to exchange a container with the cranes (15, 24, 54) and perpendicular to the rows of cells (12) to exchange a container with one of said cells.

10. Warehouse system in accordance with claim 9, **characterized in that** the container reception platform (29) includes powered means for introduction and extraction of containers to or from cells (12) on which it faces and means of transfer along the row of cells.

11. Warehouse system in accordance with claim 9, **characterized in that** the transit stations (22, 26) each include a platform (28) arranged above the container reception platform (29) and designed to remain stationary aligned with the crane (15, 24, 54) to be traversed by a container from and to the container reception platform (29).

12. Warehouse system in accordance with claim 11, **characterized in that** the upper platform (28) has communication trenches (33, 34) for workers who must interact with the container transiting through the upper platform.

13. Warehouse system in accordance with claim 11, **characterized in that** the upper platform (28) has means (37) of centering the container transiting through it.

14. Warehouse system in accordance with claim 13, **characterized in that** the centering means (37) include cushioned centering parts (38, 39).

15. Warehouse system in accordance with claim 13, **characterized in that** the upper platform (28) has means of regulation of the opening for passage of containers through it depending on the container size.

16. Warehouse system in accordance with claim 14, **characterized in that** there are means of adjustment of the position of the centering means (37) as a function of the size of the container to be centered.

17. Warehouse system in accordance with claim 13, **characterized in that** the upper platform (28) has identification code detection means (35) for a container transiting through it.

18. Warehouse system in accordance with claim 1, **characterized in that** the transfer shuttles (14) that run along the corridors (13) include carriage means (41) for insertion and extraction of containers from and to the cells (12) facing the corridors (13).

19. Warehouse system in accordance with claim 1, **characterized in that** at least one pair of intermediate cell rows in the warehouse are drawn near together to avoid having a corridor separating them and at least one pair of facing cells (12) of said intermediate rows has powered means (50) for direct transfer of a container from one cell to the other cell of the pair.

20. Warehouse system in accordance with claim 19, **characterized in that** along the transfer path between pairs of cells (12) there are means (53) of inspection of a transiting container.

21. Warehouse system in accordance with claim 20, **characterized in that** the inspection means (53) are x-ray portals, gamma-ray portals or other system of vision inside a sealed container.

22. Warehouse system in accordance with claim 3, **characterized in that** the cranes (15) have arms overhanging the ship (21).

23. Warehouse system in accordance with claim 3, **characterized in that** the cranes (54) are bridge cranes arranged astride a ship reception bay.

24. Warehouse system in accordance with claim 23, **characterized in that** there are warehouse modules on both sides of the bay.

25. Warehouse system in accordance with claim 24, **characterized in that** the bridge cranes (54) have runways arranged on the facing faces of the warehouse modules.

26. Warehouse system in accordance with claim 23 **characterized in that** the bridge cranes (54) have two winch cranes (57).

27. Warehouse system in accordance with claim 23, **characterized in that** the bridge cranes (54) are equipped with means (58) of temporary raising of the bridge (55) to a height higher than the working height.

28. Warehouse system in accordance with claim 23, **characterized in that** the bridge cranes (54) have on one side runways resting on the corresponding face of the warehouse and on the other side legs (59) for resting on the ground.

29. Warehouse system in accordance with claim 11, **characterized in that** the upper platform (28) has automatic devices for insertion and removal of the container twistlocks.

30. Warehouse system in accordance with claim 2, **characterized in that** on the entry and exit fronts (16, 17) there are provided transiting-container inspection means.

31. Warehouse system in accordance with claim 1, **characterized in that** each cell (12) can contain one 40/45 foot container or two 20 foot containers.

32. Warehouse system in accordance with claim 9, **characterized in that** the container reception platform (29) is rotatable in two different directions in order to orient the containers in the most advantageous direction for the warehouse internal operations independently of the direction in which they were taken from the ship (21) or vice versa in the most advantageous direction for the on-board ship operations when warehouse-to-ship transfer is done.

33. Warehouse system in accordance with claim 1, **characterized in that** at at least one end of the corridor (13) in which the transfer shuttles (14) run there is provided an elevator (49) for moving the shuttles (14) from one story to the other, including the ground story, and for introducing and extraction of the shuttles (14) into and from the warehouse corridors (13) based on the needs of the moment.

34. Warehouse system in accordance with claim 1, **characterized in that** at one end of the corridor (13) in which run the transfer shuttles (14) there is provided a zone equipped for inspection, control and preventive maintenance of the shuttles (14).

35. Warehouse system in accordance with claim 34, **characterized in that** the maintenance zone includes runways for extraction of the carriage means (41) outside the shuttles (14).

36. Warehouse system in accordance with claim 1, **characterized in that** it includes two separate warehouse bodies (10A, 10B) distant from each other and interconnected by a shuttle train transport system (40).

37. Warehouse system in accordance with claim 36, **characterized in that** one (10A) of the two bodies faces on a port wharf for receiving and unloading containers from a container ship and the other (10B) is placed in a zone of interchange with container road-haulage means.

## Patentansprüche

1. Mehrstöckiges Lagerhaussystem (10) mit axial ausgerichteten Reihen von Zellen (12) zur Unterbringung von Containern darin und Verbindungsgängen (13) parallel zu den Reihen, wobei die Reihen von Zellen (12) an die Verbindungsgänge (13) angrenzen und wobei in den Verbindungsgängen (13) in jedem Stockwerk Shuttles (14) zur Beförderung von Containern entlang des Verbindungsganges (13) in dem Stockwerk und zum Einschieben und Herausziehen von Containern in die und aus den Zellen (12), die in dem Stockwerk an den Verbindungsgang (13) angrenzen, arbeiten, **dadurch gekennzeichnet, dass** die Reihen von Zellen Zellen umfassen, die einen Lift (20) für die Beförderung der Container zwischen den Stockwerken beinhalten.

2. Lagerhaussystem nach Anspruch 1, **dadurch gekennzeichnet, dass** das Lagerhaus auf einem Stockwerk eine Reihe (18, 19) von außenliegenden Zellen aufweist, die nach einer Außenseite (16, 17) des Lagerhauses hin offen sind und einen Eingang und einen Ausgang für Container zu Transitstationen (22, 26) bilden, die Container von Belade- und Entladekränen (15, 24, 54) aufnehmen.

3. Lagerhaussystem nach Anspruch 2, **dadurch gekennzeichnet, dass** Kräne (15, 54) an einem Kai zur Entgegennahme und zum Entladen von Containern von einem Containerschiff (21) liegen.

4. Lagerhaussystem nach Anspruch 2, **dadurch gekennzeichnet, dass** Kräne (24) an einer Strecke zur Entgegennahme und zum Entladen von Containern von Landtransportmitteln (25) liegen.

5. Lagerhaussystem nach den Ansprüchen 3 und 4, **dadurch gekennzeichnet, dass** das Lagerhaus Reihen (19, 18) von Zellen (12) auf gegenüberliegenden Seiten (17, 16) zum Austausch von Containern zwischen Landtransportmitteln (25) und dem Schiff (21) aufweist.

6. Lagerhaussystem nach Anspruch 5, **dadurch gekennzeichnet, dass** das Stockwerk für den Austausch mit dem Schiff (21) und das Stockwerk für den Austausch mit Landtransportmitteln (25) nicht dieselben sind.

7. Lagerhaussystem nach Anspruch 6, **dadurch gekennzeichnet, dass** das Stockwerk für den Austausch mit einem Schiff (21) das fünfte Stockwerk des Lagerhauses ist.

8. Lagerhaussystem nach Anspruch 6, **dadurch gekennzeichnet, dass** das Stockwerk für den Austausch mit Landtransportmitteln (25) das vierte Stockwerk des Lagerhauses ist.

9. Lagerhaussystem nach Anspruch 2, **dadurch gekennzeichnet, dass** die Transitstationen (22, 26) jeweils eine Plattform (29) für die Aufnahme eines Containers umfassen, die drehbar sind, so dass sie parallel zu den Reihen von Zellen (12) ausgerichtet werden können, um einen Container mit den Kränen (15, 24, 54) auszutauschen, und senkrecht zu den Reihen von Zellen (12), um einen Container mit einer dieser Zellen auszutauschen.

10. Lagerhaussystem nach Anspruch 9, **dadurch gekennzeichnet, dass** die Containeraufnahmeplattform (29) motorisch betriebene Mittel zum Einschieben und Herausziehen von Containern in die bzw. aus den Zellen (12), denen sie gegenübersteht, und Mittel für den Transport entlang der Reihe von Zellen beinhaltet.

11. Lagerhaussystem nach Anspruch 9, **dadurch gekennzeichnet, dass** die Transitstationen (22, 26) jeweils eine Plattform (28) aufweisen, die über der Containeraufnahmeplattform (29) angeordnet und so konstruiert sind, dass sie stationär mit dem Kran (15, 24, 54) ausgerichtet bleiben, so dass sie von einem Container von der und zu der Containeraufnahmeplattform (29) unterquert werden.

12. Lagerhaussystem nach Anspruch 11, **dadurch gekennzeichnet, dass** die obere Plattform (28) Kommunikationsgräben (33, 34) für Arbeiter aufweist, die mit dem Container interagieren müssen, der die obere Plattform passiert.

13. Lagerhaussystem nach Anspruch 11, **dadurch gekennzeichnet, dass** die obere Plattform (28) Mittel (37) zur Zentrierung des Containers, der sie passiert, aufweist.

14. Lagerhaussystem nach Anspruch 13, **dadurch gekennzeichnet, dass** die Zentrierungsmittel (37) gepufferte Zentrierteile (38, 39) beinhalten.

15. Lagerhaussystem nach Anspruch 13, **dadurch gekennzeichnet, dass** die obere Plattform (28) Mittel zur Regulierung der Öffnung für die Passage von Containern durch sie in Abhängigkeit von der Containergröße aufweist.

16. Lagerhaussystem nach Anspruch 14, **dadurch gekennzeichnet, dass** Mittel für die Einstellung der Position der Zentriermittel (37) in Abhängigkeit von der Größe des zu zentrierenden Containers vorhanden sind.

17. Lagerhaussystem nach Anspruch 13, **dadurch gekennzeichnet, dass** die obere Plattform (28) Mittel zum Erfassen des Identifikationscodes (35) eines Containers, der sie passiert, aufweist.

18. Lagerhaussystem nach Anspruch 1, **dadurch gekennzeichnet, dass** die Transportshuttles (14), die sich entlang der Verbindungsgänge (13) bewegen, Transportschlittenelemente (41) zum Einschieben und Herausziehen von Containern in die und aus den Zellen (12), die an die Verbindungsgänge (13) angrenzen, umfassen.

19. Lagerhaussystem nach Anspruch 1, **dadurch gekennzeichnet, dass** mindestens ein Paar im Lagerhaus innenliegender Zellenreihen so nah zusammengerückt ist, dass ein sie trennender Verbindungsgang ausgeschlossen ist, und mindestens ein Paar einander gegenüberliegender Zellen (12) dieser innenliegenden Reihen motorisch betriebene Mittel (50) für einen direkten Transfer eines Containers von einer Zelle in die andere Zelle des Paares aufweist.

20. Lagerhaussystem nach Anspruch 19, **dadurch gekennzeichnet, dass** entlang des Transferweges zwischen den Paaren von Zellen (12) Mittel (53) zur Inspektion eines passierenden Containers vorhanden sind.

21. Lagerhaussystem nach Anspruch 20, **dadurch gekennzeichnet, dass** die Inspektionsmittel (53) Röntgenstrahlenportale, Gammastrahlenportale oder andere Systeme sind, um in einen versiegelten Container zu sehen.

22. Lagerhaussystem nach Anspruch 3, **dadurch gekennzeichnet, dass** die Kräne (15) Ausleger aufweisen, die über das Schiff (21) ragen.

23. Lagerhaussystem nach Anspruch 3, **dadurch gekennzeichnet, dass** die Kräne (54) Kranbrücken sind, die über einem Schiffsanlegebecken angeordnet sind.

24. Lagerhaussystem nach Anspruch 23, **dadurch gekennzeichnet, dass** auf beiden Seiten des Beckens Lagerhausmodule vorhanden sind.

25. Lagerhaussystem nach Anspruch 24, **dadurch gekennzeichnet, dass** die Kranbrücken (54) Laufbahnen aufweisen, die an den angrenzenden Seiten der Lagerhausmodule angeordnet sind.

26. Lagerhaussystem nach Anspruch 23, **dadurch gekennzeichnet, dass** die Kranbrücken (54) zwei Hebezeuge (57) aufweisen.

27. Lagerhaussystem nach Anspruch 23, **dadurch gekennzeichnet, dass** die Kranbrücken (54) mit Mitteln (58) zum zeitweiligen Anheben der Brücke (55) auf eine Höhe, die höher als die Arbeitshöhe ist, ausgerüstet sind.

28. Lagerhaussystem nach Anspruch 23, **dadurch gekennzeichnet, dass** die Kranbrücken (54) auf der einen Seite Laufbahnen aufweisen, die auf der entsprechenden Seite des Lagerhauses aufliegen, und auf der anderen Seite Beine (59) zum Abstützen auf dem Boden.

29. Lagerhaussystem nach Anspruch 11, **dadurch gekennzeichnet, dass** die obere Plattform (28) automatische Vorrichtungen für das Einsetzen und Herausnehmen der Container-Twistlocks aufweist.

30. Lagerhaussystem nach Anspruch 2, **dadurch gekennzeichnet, dass** an den Eingangs- und Ausgangsseiten (16, 17) Inspektionsmittel für passierende Container zur Verfügung stehen.

31. Lagerhaussystem nach Anspruch 1, **dadurch gekennzeichnet, dass** jede Zelle (12) einen 40/45-Fuß Container oder zwei 20-Fuß Container aufnehmen kann.

32. Lagerhaussystem nach Anspruch 9, **dadurch gekennzeichnet, dass** die Containeraufnahmeplattform (29) in zwei unterschiedliche Richtungen drehbar ist, um die Container unabhängig von der Richtung, in der sie vom Schiff (21) genommen wurden, in die vorteilhafteste Richtung für die internen Arbeitsabläufe im Lagerhaus zu bringen bzw. umgekehrt in die vorteilhafteste Richtung für die Arbeitsabläufe an Bord des Schiffes, wenn der Transfer vom Lagerhaus zum Schiff abgeschlossen ist.

33. Lagerhaussystem nach Anspruch 1, **dadurch gekennzeichnet, dass** wenigstens an einem Ende des Verbindungsganges (13), in dem die Transportshuttles (14) arbeiten ein Lift (49) zur Beförderung der Shuttles (14) von einem Stockwerk zum anderen, einschließlich dem Erdgeschoss, und zum Hineinschieben und Herausziehen der Shuttles (14) in die und aus den Lagerhausverbindungsgängen (13), basierend auf den in dem Moment bestehenden Notwendigkeiten, zur Verfügung steht.

34. Lagerhaussystem nach Anspruch 1, **dadurch gekennzeichnet, dass** an einem Ende des Verbindungsganges (13), in dem die Transportshuttles (14) arbeiten, eine Zone zur Verfügung steht, die für die Inspektion, Kontrolle und vorbeugende Wartung der Shuttles (14) ausgerüstet ist.

35. Lagerhaussystem nach Anspruch 34, **dadurch gekennzeichnet, dass** die Wartungszone Bahnen für das Herausziehen der Transportschlittenelemente (41) aus den Shuttles (14) umfasst.

36. Lagerhaussystem nach Anspruch 1, **dadurch gekennzeichnet, dass** es zwei separate Lagerhauskörper (10A, 10B) umfasst, die voneinander abgesetzt sind und durch ein Shuttlezug-Transportsystem (40) untereinander verbunden sind.

37. Lagerhaussystem nach Anspruch 36, **dadurch gekennzeichnet, dass** einer (10A) der beiden Körper an einem Hafenkai zur Entgegennahme und zum Entladen von Containern von einem Containerschiff liegt und der andere (10B) in einer Zone zum Austausch mit Containertransportmitteln für die Straße positioniert ist.

## Revendications

1. Système d'entrepôt à étages multiples (10) possédant des rangées de cellules (12) destinées à recevoir à l'intérieur des conteneurs et des couloirs (13) parallèles auxdites rangées, auxquels couloirs (13) lesdites rangées de cellules (12) font face et dans lesquels couloirs (13), à chaque étage, des navettes (14) circulent pour déplacer les conteneurs le long du couloir (13) dans ledit étage et pour insérer des conteneurs dans des cellules (12) qui font face audit couloir (13) dans ledit étage et les en extraire, **caractérisé en ce que** les rangées de cellules possèdent des cellules qui comprennent un ascenseur (20) destiné à déplacer les conteneurs entre les étages.

2. Système d'entrepôt selon la revendication 1, **caractérisé en ce que**, sur un étage, l'entrepôt possède une rangée (18, 19) de cellules extérieures qui s'ouvrent sur un côté extérieur (16, 17) de l'entrepôt pour constituer une entrée et une sortie pour les conteneurs vers des stations de transit (22, 26) qui reçoivent les conteneurs à partir de grues de chargement et de déchargement (15, 24 ,54).

3. Système d'entrepôt selon la revendication 2, **caractérisé en ce que** des grues (15, 54) font face à un quai destiné à recevoir et à décharger des conteneurs d'un navire porte-conteneurs (21).

4. Système d'entrepôt selon la revendication 2, **caractérisé en ce que** les grues (24) font face à un chemin de roulement pour recevoir et décharger des conteneurs à partir de moyens terrestres (25).

5. Système d'entrepôt selon les revendications 3 et 4, **caractérisé en ce que** l'entrepôt possède des rangées (19, 18) de cellules (12) sur des côtés opposés (17, 16) pour l'échange de conteneurs avec les moyens terrestres (25) et avec le navire (21).

6. Système d'entrepôt selon la revendication 5, **caractérisé en ce que** l'étage prévu pour l'échange avec le navire (21) et l'étage prévu pour l'échange avec des moyens terrestres (25) sont différents l'un de l'autre.

7. Système d'entrepôt selon la revendication 6, **caractérisé en ce que** l'étage prévu pour l'échange avec un navire (21) est le cinquième étage de l'entrepôt.

8. Système d'entrepôt selon la revendication 6, **caractérisé en ce que** l'étage prévu pour l'échange avec des moyens terrestres (25) est le quatrième étage de l'entrepôt.

9. Système d'entrepôt selon la revendication 2, **caractérisé en ce que** les stations de transit (22, 26) comprennent chacun une plate-forme (29) destinée à recevoir un conteneur et qui peut être tournée de façon à être disposée parallèlement aux rangées de cellules (12) pour échanger un conteneur avec les grues (15, 24, 54) et perpendiculairement aux rangées de cellules (12) pour échanger un conteneur avec une desdites cellules.

10. Système d'entrepôt selon la revendication 9, **caractérisé en ce que** la plate-forme (29) de réception de conteneurs comprend des moyens motorisés pour l'introduction de conteneurs dans des cellules (12) auxquels elle fait face, et pour les en extraire, et des moyens de transfert le long de la rangée de cellules.

11. Système d'entrepôt selon la revendication 9, **caractérisé en ce que** les stations de transit (22, 26) comprennent chacune une plate-forme (28) agencée au-dessus de la plate-forme (29) de réception de conteneurs et construite pour rester en position fixe alignée avec la grue (15, 24, 54) de manière à être traversée par un conteneur en provenance et en direction de la plate-forme (29) de réception de conteneurs.

12. Système d'entrepôt selon la revendication 11, **caractérisé en ce que** la plate-forme supérieure (28) possède des tranchées de communication (33, 34) pour les ouvriers qui doivent intervenir dans le transit des conteneurs à travers la plate-forme supérieure.

13. Système d'entrepôt selon la revendication 11, **caractérisé en ce que** la plate-forme supérieure (28) possède des moyens (37) pour le centrage du conteneur qui transite à travers elle.

14. Système d'entrepôt selon la revendication 13, **caractérisé en ce que** les moyens de centrage (37) comprennent des parties de centrage amorties (38, 39).

15. Système d'entrepôt selon la revendication 13, **caractérisé en ce que** la plate-forme supérieure (28) possède des moyens de réglage de l'ouverture prévue pour le passage de conteneurs à travers elle en fonction de la dimension du conteneur.

16. Système d'entrepôt selon la revendication 14, **caractérisé en ce qu'**il y a des moyens de réglage de la position des moyens de centrage (37) en fonction de la dimension du conteneur à centrer.

17. Système d'entrepôt selon la revendication 13, **caractérisé en ce que** la plate-forme supérieure (28) possède des moyens (35) de détection de code d'identification pour un conteneur qui transite à travers elle.

18. Système d'entrepôt selon la revendication 1, **caractérisé en ce que** les navettes de transfert (14) qui circulent le long des couloirs (13) comprennent des moyens formant chariots (41) pour l'insertion de conteneurs dans les cellules (12) qui font face aux couloirs (13) et leur extraction de ces cellules.

19. Système d'entrepôt selon la revendication 1, **caractérisé en ce qu'**au moins une paire de rangées de cellules intermédiaires à l'intérieur de l'entrepôt sont rapprochées l'une de l'autre pour éviter d'avoir un couloir qui les sépare, et au moins une paire de cellules (12) se faisant face desdites rangées intermédiaires possèdent des moyens motorisés (50) pour diriger le transfert d'un conteneur d'une cellule à l'autre cellule de la paire.

20. Système d'entrepôt selon la revendication 19, **caractérisé en ce que**, le long du chemin de transfert entre des paires de cellules (12), se trouvent des moyens (53) pour l'inspection d'un conteneur en transit.

21. Système d'entrepôt selon la revendication 20, **caractérisé en ce que** les moyens d'inspection (53) sont des portiques à rayon X, des portiques à rayon gamma ou d'autres systèmes permettant la vision à l'intérieur d'un conteneur fermé.

22. Système d'entrepôt selon la revendication 3, **caractérisé en ce que** les grues (15) ont des bras qui surplombent le navire (21).

23. Système d'entrepôt selon la revendication 3, **caractérisé en ce que** les grues (54) sont des ponts-roulants agencés à cheval sur une baie de réception de navires.

24. Système d'entrepôt selon la revendication 23, **caractérisé en ce qu'**il y a des modules d'entrepôt des deux côtés de la baie.

25. Système d'entrepôt selon la revendication 24, **caractérisé en ce que** les ponts-roulant (54) ont des chemins de roulement agencés sur les faces des modules de l'entrepôt qui se font face.

26. Système d'entrepôt selon la revendication 23, **caractérisé en ce que** les ponts-roulants (54) possèdent deux grues à treuil (57).

27. Système d'entrepôt selon la revendication 23, **caractérisé en ce que** les ponts-roulants (54) sont équipés de moyens (58) pour surélever temporairement le pont (55) à une hauteur plus haute que la hauteur de travail.

28. Système d'entrepôt selon la revendication 23, **caractérisé en ce que** les ponts-roulants (54) ont, d'un côté, des chemins tournants qui prennent appui sur la face correspondante de l'entrepôt et, de l'autre côté, des jambes (59) pour prendre appui sur le sol.

29. Système d'entrepôt selon la revendication 11, **caractérisé en ce que** la plate-forme supérieure (28) possède des dispositifs automatiques pour la mise en place et l'enlèvement des verrous tournants.

30. Système d'entrepôt selon la revendication 2, **caractérisé en ce que** des moyens d'inspection des conteneurs en transit sont prévus sur les fronts d'entrée et de sortie (16, 17).

31. Système d'entrepôt selon la revendication 1, **caractérisé en ce que** chaque cellule (12) peut contenir un conteneur de 40-45 pieds ou deux conteneurs de 20 pieds.

32. Système d'entrepôt selon la revendication 9, **caractérisé en ce que** la plate-forme de réception de conteneur (29) peut être tournée dans deux directions différentes afin d'orienter les conteneurs dans la direction la plus avantageuse pour les opérations internes de l'entrepôt indépendamment de la direction dans laquelle ils ont été pris sur le navire (21) ou inversement, dans la direction la plus avantageuse pour les opérations à bord du navire lorsqu'on effectue un transfert de l'entrepôt vers le navire.

33. Système d'entrepôt selon la revendication 1, **caractérisé en ce qu'**à au moins une extrémité du couloir (13) dans lequel les navettes de transfert (14) circulent est prévu un ascenseur (49) destiné à déplacer les navettes (14) d'un étage à l'autre, y compris l'étage au niveau du sol, et à introduire les navettes (14) dans les couloirs (13) de l'entrepôt et les en extraire, selon les nécessités du moment ;

34. Système d'entrepôt selon la revendication 1, **caractérisé en ce qu'**à une extrémité du couloir (13) dans lequel les navettes de transfert (14) circulent est prévue une zone équipée pour l'inspection, le contrôle et la maintenance préventive des navettes (14).

35. Système d'entrepôt selon la revendication 34, **caractérisé en ce que** la zone de maintenance comprend des chemins de roulement pour extraire les moyens formant chariots (41) des navettes (14).

36. Système d'entrepôt selon la revendication 1, **caractérisé en ce qu'**il comprend deux corps d'entrepôt séparés (10A, 10B) espacés l'un de l'autre et interconnectés par un système (40) de transport par trains- navettes.

37. Système d'entrepôt selon la revendication 36, **caractérisé en ce qu'**un (10A) des deux corps fait face à un quai de port pour recevoir et décharger des conteneurs d'un navire porte-conteneurs tandis que l'autre (10B) est placé dans une zone d'échange avec des moyens de transport sur route pour conteneurs.
